**Europäisches Patentamt**

**European Patent Office**

**Office européen des brevets**

(11) Publication number: **0 118 359**
**B1**

(12) **EUROPEAN PATENT SPECIFICATION**

(45) Date of publication of patent specification: **20.05.87**

(51) Int. Cl.⁴: **G 01 P 15/13,** G 01 P 15/125

(21) Application number: **84400401.0**

(22) Date of filing: **28.02.84**

(54) Electrostatic accelerometer.

(30) Priority: **28.02.83 FR 8303527**

(43) Date of publication of application:
**12.09.84 Bulletin 84/37**

(45) Publication of the grant of the patent:
**20.05.87 Bulletin 87/21**

(84) Designated Contracting States:
**DE GB**

(56) References cited:
**DE-B-1 137 241**
**FR-A-2 511 509**
**GB-A-2 088 564**
**US-A-3 272 016**
**US-A-3 742 767**

(73) Proprietor: **Office National d'Etudes et de Recherches Aerospatiales (O.N.E.R.A.)**
**29 Avenue de la Division Leclerc**
**F-92320 Châtillon-sous-Bagneux (FR)**

(72) Inventor: **Bernard, Alain Maurice**
**2, Allée des Renardeaux**
**F-94260 Fresnes (FR)**
Inventor: **Sacleux, Bernard René**
**47, Boulevard du Moulin de la Tour**
**F-92350 Plessis Robinson (FR)**

(74) Representative: **Cabinet Martinet**
**62, rue des Mathurins**
**F-75008 Paris (FR)**

Courier Press, Leamington Spa, England.

## Description

This invention concerns those accelerometers in which the acceleration measurement is deduced from that of the forces required to hold a test weight still or bring it back to a position defined with respect to the body of the apparatus. It concerns more particularly those accelerometers where these forces are electrostatically produced.

In this case, the force generator employs a series of n electrodes $E_1, E_2, \ldots E_i, \ldots, E_n$ set out around the test weight and integral with the body of the accelerometer. The parameters will be denoted as follows:

$V_0$: potential of the test weight,

$v_i$: potential of the electrode $E_i$,

$C_i$: capacity of the electrode $E_i$ with respect to the test weight,

x, y, z: coordinates of the center of the test weight within a reference frame $\overrightarrow{x}, \overrightarrow{y}, \overrightarrow{z}$, associated with the body of the accelerometer,

$\theta, \Psi, \Phi$: three angles defining the attitude of the test weight with respect to the reference frame $\overrightarrow{x}, \overrightarrow{y}, \overrightarrow{z}$.

For small angles $\theta, \Psi$ and $\Phi$ correspond to rotations respectively about the axes $\overrightarrow{x}, \overrightarrow{y}$ and $\overrightarrow{z}$.

$\overrightarrow{\nabla}$: gradient operator in relation to the variables x, y, z, x, y, z.

$\overrightarrow{\nabla}$: gradient operator in relation to the variables $\theta, \Psi, \phi, \theta, \psi, \Phi$.

If applied to the capacities $C_i$, these give rise to the following in the reference frame $\overrightarrow{x}, \overrightarrow{y}, \overrightarrow{z}$:

$$\overrightarrow{\nabla}_{xyz}(C_i) = \begin{vmatrix} \dfrac{\partial C_i}{\partial x} \\[2mm] \dfrac{\partial C_i}{\partial y} \\[2mm] \dfrac{\partial C_i}{\partial z} \end{vmatrix} \quad \text{and} \quad \overrightarrow{\nabla}_{\theta\Psi\phi}(C_i) = \begin{vmatrix} \dfrac{\partial C_i}{\partial \theta} \\[2mm] \dfrac{\partial C_i}{\partial \Psi} \\[2mm] \dfrac{\partial C_i}{\partial \phi} \end{vmatrix}$$

Using these notations, it can be proved that the electrostatic force $\overrightarrow{F}$ and couple $\overrightarrow{M}$ exerted on the test weight may be expressed as follows in the reference frame $\overrightarrow{x}, \overrightarrow{y}, \overrightarrow{z}$:

$$\overrightarrow{F} = \frac{1}{2} \sum_{i=1}^{n} \overrightarrow{\nabla}_{xyz}(C_i)(V_i - V_0)^2$$

$$\overrightarrow{M} = \frac{1}{2} \sum_{i=1}^{n} \overrightarrow{\nabla}_{\theta\Psi\phi}(C_i)(V_i - V_0)^2$$

Only the value of the electrostaic force $\overrightarrow{F}$ has any bearing in how the accelerometer works, but to determine said force, in addition to the measurements of the potentials $V_i$, the values must be known of the gradients

$$\overrightarrow{\nabla}_{xyz}(C_i)$$

and potential $V_0$ of the test weight.

The method of determining the gradient

$$\overrightarrow{\nabla}_{xyz}(C_i)$$

on the one hand and zero cueing of the potential $V_0$ on the other hand has already been discussed in U.S. Patent US—A—4 393 710 issued July 19, 1983 (corresponds to GB—A—2 088 564, published 9.06.82).

Accelerometers of the electrostatic type are already known through FR—A—2 511 509 which discloses a triaxial accelerometer having an electrostatical suspension and a cruciform test weight.

DE—B—1 137 241 filed April 13, 1961 discloses an accelerometer having a cubic or spherical test weight, a pressure sensing or capacitive position detection system and a pressurized air position control system.

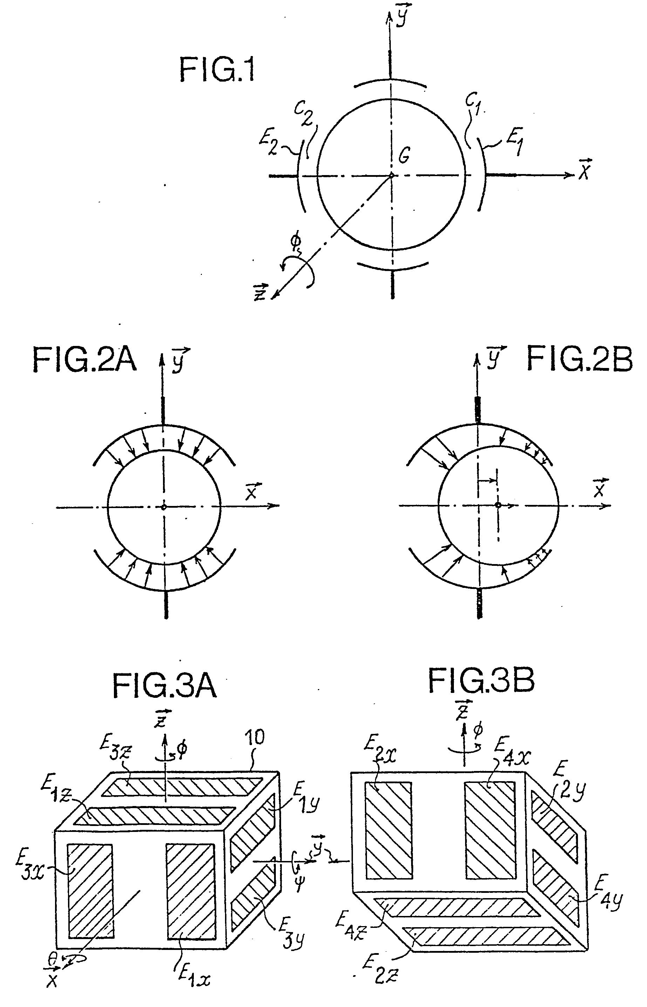

With a view to developing an ultra-sensitive accelerometer, the electrostatic suspension of a spherical weight offers the advantage of requiring position slaving in three axes only (rotations are left free). Along each axis, differential capacitive measurements made by means of diametrically opposed electrodes ($E_1$ and $E_2$ in Fig. 1) determine the translation of the sphere and hence the acceleration to which the center of mass G thereof is subjected.

The use of spherical test weights has a further advantage. There is no need to provide the surface of the spherical ball with metal portions delimited from one another and forming one of the armatures of the position detection and position control capacitors. Those armatures are nothing else than those parts of the conducting ball which are opposite the armatures on the inner cage wall.

In the case of an ideal weight, perfectly spheroid and having equal potential, the mechanical and electrical properties are isomorphons for any change of reference frame centered at the cage center. Any rotation would therefore leave the capacities unchanged and likewise the potential differences between the electrodes and the test weight.

In practice, shortcomings in sphericity and fluctuations in potential of the test weight can in particular affect performance of the accelerometer when the surface parts of the floating weight, positioned opposite the electrodes, change with rotation.

Thus, by way of an example:

a) rotation $\phi$ of the test weight (Fig. 1) about the axis $\overrightarrow{z}$ is likely to cause a variation in the difference $C_2 - C_1$ of the capacities in the absence of any change in position of the center of mass G of the sphere. Under these conditions, slaving in translation along the axis $\overrightarrow{x}$ recenters the test weight in such a way as to restore equality in the

capacities $C_1$ and $C_2$. The acceleration imparted to the test weight for this recentering operation has a direct adverse effect on the measurement by producing a low frequency noise (n times the frequency of rotation of the sphere for a sphericity defect of order n).

b) if the slaving pass band is sufficiently large to ensure equality in the capacities $C_1$ and $C_2$ with negligible error, the simultaneous variations in these capacities correspond essentially to variation $\Delta e$ in the mean distance e between the electrodes and the sphere. As far as the accelerometer is concerned, this results in a relative sensitivity variation equal to

$$2\frac{\Delta e}{e}\ .$$

Hence, for an ultrasensitive accelerometer such as that recapped above (intended for measuring solely accelerations less than $10^{-4}$ m/s$^2$), the following values are obtained for a test weight 4 cm in diameter associated with 25 mm$^2$ electrodes:

$$e \cong 300 \ \mu m$$

$$\Delta e \geqq 0.1 \ \mu m$$

$$\frac{2\Delta e}{e} > 6.10^{-4}$$

For less sensitive accelerometers, the situation is worse since the dimension e must be reduced to obtain the necessary electrostatic forces with applied voltages of reasonable proportions (<300 volts).

c) despite the care taken in fabricating the spherical test weight and the choice of conducting materials from which it is formed, the fluctuations in potential experienced at the surface of this sphere can reach several tens of millivolts. When the sphere turns, these fluctuations in potential are at the root of variations in the interactive electrostatic forces between the test weight and the conductors arranged thereabout (electrodes and cage).

A further difficulty experienced with a floating spherical test weight stems from variations in the geometry of the spacers between the electrodes and the sphere when the latter moves orthogonally to the sensitive axis that is theoretically the axis of the electrodes.

These variations in geometry give rise to nonlinear coupling between the accelerometer axes: the application of voltages to the electrodes set out for the purpose of translationally slaving the sphere along the axis $\vec{y}$ (Fig. 2a) causes a parasite force along the axis $\vec{x}$ when the sphere is decentered under the effect of, for instance, an acceleration along $\vec{x}$ (Fig. 2b), even if the axes $\vec{x}$ and $\vec{y}$ are perfectly perpendicular. In the case of ultra-sensitive accelerometers, designed for spatial applications, the coefficients of sensitivity cannot be determined on the ground where such accelerometers are saturated by the acceleration due to gravity. It then becomes very difficult to determine and take account of these coupling effects.

All the sources of error educed above are particularly detrimental when the accelerators are intended for measuring the gradients of gravity, that is must require ultra sensitivity and accuracy as good as that required for navigation accelerometers.

In particular, linear accelerometers should be designed with very faithful sensitivity for carrying out differential measurement between accelerometers (measurement of gravity gradients in spatial orbit).

According to the invention, there is provided a tridimensional electrostatic accelerometer comprising:
a cube-shaped test weight;
test weight electrodes on the faces of said cube-shaped test weight;
a hollow cage accommodating said test weight and within which said test weight can undergo small movements of translation and rotation;
cage electrodes on said cage, associated with the test weight electrodes respectively and forming capacitors therewith;
characterized in that
on each face of the cube-shaped test weight two electrodes are provided adjacent to each other, the test weight electrodes on two parallel faces of the cube-shaped test weight being opposite two by two, whereby each test weight electrode on a face ($E_1$) has an adjacent electrode ($E_3$) on the same face, an opposite electrode ($E_2$) on the parallel face and a diagonally opposite electrode ($E_4$) on said parallel face and the test weight electrodes forming three sets of four electrodes, each set being relative to one of the three sensitive axes of the accelerometer, comprising a given electrode, an adjacent electrode, an opposite electrode and a diagonally opposite electrode which form with the associated cage electrodes capacitors $C_1$, $C_2$, $C_3$ and $C_4$ respectively;
and that the accelerometer further comprises:
means for measuring for each value of the electrodes set j the quantities

$$(C_1 - C_2)_j \qquad (C_3 - C_4)_j$$

$$(C_1 + C_2)_j \qquad (C_3 + C_4)_j$$

and producing voltages proportional thereto;
means for forming with said above quantities

$$V_{tr,j} = (C_1 + C_3)_j - (C_2 + C_4)_j$$

$$V_{rot,j} = (C_3 - C_4)_j - (C_1 - C_2)_j$$

and producing voltages proportional thereto;
means for forming with said above quantities

$$-V_{tr,j}+V_{rot,j}$$

and applying a voltage proportional thereto to a given electrode of an electrode set j;

$$V_{tr,j}-V_{rot,j}$$

and applying a voltage proportional thereto to the opposite electrode of said set j

$$V_{tr,j}+V_{rot,j}$$

and applying a voltage proportional thereto the adjacent electrode of said set j

$$-V_{tr,j} \qquad -V_{rot,j}$$

and applying a voltage proportional thereto to the diagonally opposite electrode of said set j.

The invention will now be described in detail with reference to the appended drawings in which:

— Fig. 1 schematizes a ball and its electrodes and was discussed in the foregoing;

— figs. 2a and 2b show the modification in the geometry and electric field lines when the test weight is moved off center with respect to the electrodes;

these were discussed in the foregoing:

— Figs. 3a and 3b depict the cubic test weight and the electrodes related to translational slaving along $\vec{x}, \vec{y}, \vec{z}$ and rotational slaving through $\Psi$, $\theta$ and $\phi$;

— Fig. 4 depicts more particularly the electrodes acting on x and $\phi$;

— Fig. 5 shows the configuration of the electrical field lines in the presence of electrode positioning faults;

— Fig. 6 shows how slaving is achieved translationally and rotationary via four electrodes that are used simultaneously for the purposes of position detection and positioning by electrostatic effect; and

— Fig. 7 depicts the circuit for superposing detection signals and electrostatic action signals.

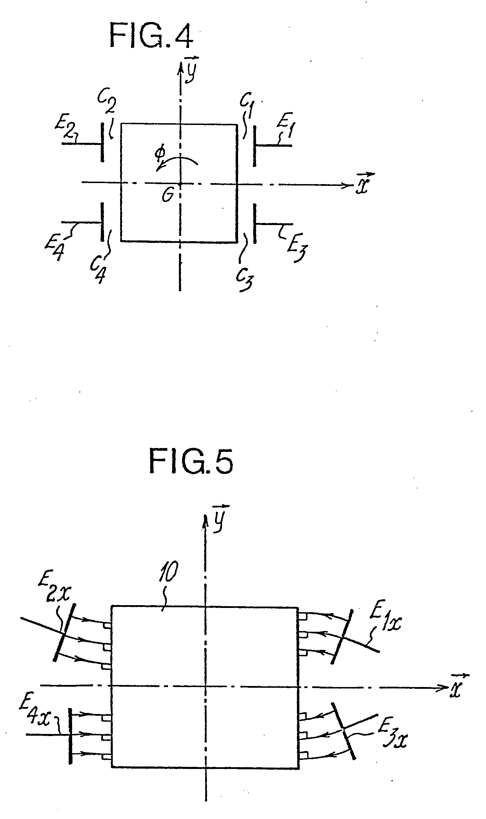

Test weight 10 is in the shape of a cube (Figs. 3A and 3B). Two electrodes are respectively placed opposite each side of the cube:

$E_{1x}$ and $E_{3x}$ on the front side perpendicular to Ox

$E_{2x}$ and $E_{4x}$ on the rear side perpendicular to Ox

$E_{1y}$ and $E_{3y}$ on the right side perpendicular to Oy

$E_{2y}$ and $E_{4y}$ on the left side perpendicular to Oy

$E_{1z}$ and $E_{3z}$ on the top side perpendicular to Oz

$E_{2z}$ and $E_{4z}$ on the bottom side perpendicular to Oz.

Further, even in the case where the electrodes are not exactly parallel to the faces of the cube, the directions orthogonal to the sides of the cube (directions of the field lines at the cube level) are privileged action and detection directions (Fig. 5).

As a result, whatever the voltages fed to the electrodes $E_{ix}$, the force exerted along axis $\vec{y}$ parallel to the electrodes $E_{ix}$ is zero. Likewise, if the cube moves translationally along the axis $\vec{y}$, the forces exerted along axis $\vec{x}$ go unchanged. These properties hold true even if the positioning of the electrodes presents imperfections (both regarding distance and orientation).

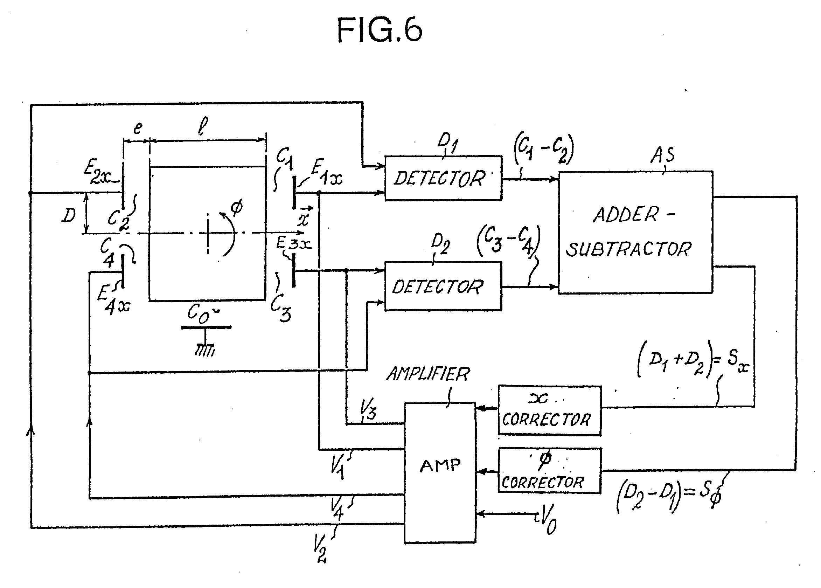

Fig. 6 illustrates how slaving is achieved in translation and rotation via the four electrodes that serve simultaneously in position detection and electrostatic positioning.

The capacitive detectors $D_1$ and $D_2$ provide voltages proportional to the differences in capacities $(C_1-C_2)$ and $(C_3-C_4)$. Considering the translation $\vec{x}$ and the rotation $\phi$ of the test weight, and calling $\sigma$ the electrode surface area, e their distance from the test weight, 2D the distance between the centers of two electrodes on the same side of the cube, then to a first approximation, the following may be written:

$$\left. \begin{array}{l} C_1-C_2 \simeq \dfrac{2\varepsilon\bar{\sigma}}{e^2}[x-D_\phi] \\[3mm] C_3-C_4 \simeq \dfrac{2\varepsilon\bar{\sigma}}{e^2}[\bar{x}+D_\phi] \end{array} \right\} \quad (1)$$

where $\varepsilon$ is the permittivity of vacuum.

From equations (1), it may be concluded that:

$$\left. \begin{array}{l} x \simeq \dfrac{e^2}{\varepsilon\sigma}[(C_1+C_3)-(C_2+C_4)] \\[3mm] \phi \simeq \dfrac{e^2}{\varepsilon\sigma D}[(C_3-C_4)-(C_1-C_2)] \end{array} \right\} \quad (2)$$

The operation giving the values of x and $\phi$ are performed in an adder-subtractor AS that outputs the signals $S_x$ and $S_\phi$.

These signals $S_x$ and $S_\phi$ are fed respectively to the corrector circuts $COR_x$ and $COR_\phi$ that make it possible to reduce slaving signals $V_x$ and $V_\phi$ (proportional to $S_x$ and $S_\phi$ and having further differential and integral components).

Lastly, an assembly of amplifier circuits AMP supplies the following electrostatic action signals:

$V_1=V_0-V_x+V_\phi$ that is fed to $E_{1x}$
$V_2=V_0+V_x-V_\phi$ that is fed to $E_{2x}$
$V_3=-V_0+V_x+V_\phi$ that is fed to $E_{3x}$
$V_4=-V_0-V_x-V_\phi$ that is fed to $E_{4x}$.

These electrostatic action voltages can be alternating with small angular frequency $\omega_A$ compared to angular frequency $\omega_D$ used for the detection voltages. In this instance, the action voltage applied to the electrode $E_i$ has the form:

$$V_i . \sin \omega_A t$$

Since, as already stated, the electrodes $E_1$, $E_2$, $E_3$ and $E_4$ are used both for position detection and positioning action, an arrangement must be defined, whereby action voltages can be applied to these electrodes without disturbing the manner in which the capacitive detectors work.

The arrangement adopted is very close to that described in patent US—A—4 393 710.

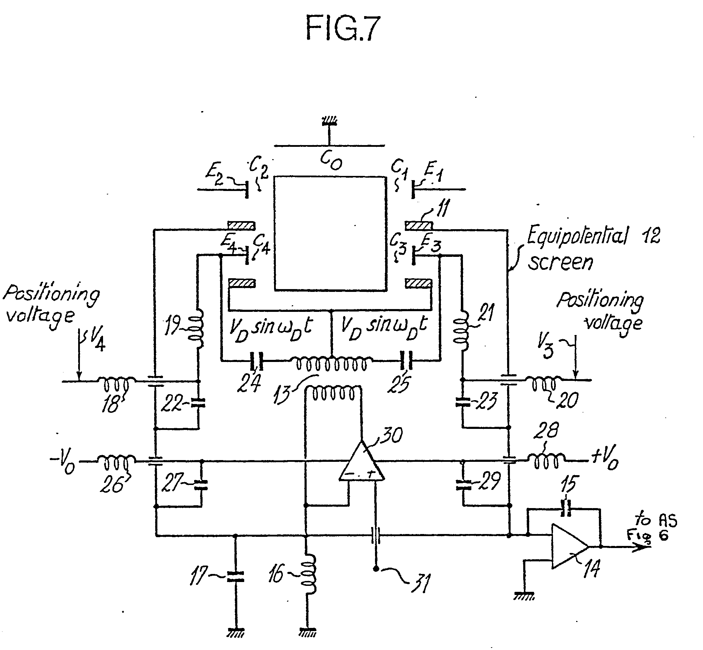

Fig. 7 depicts this arrangement.

Guard electrodes 11 coaxial with the active electrodes such as $E_1$ and $E_3$ provide an equipotential screen 12 around said active electrodes around differential transformer 13 and around amplifying circuit 30 used for supplying the primary windings in transformer 13 with a signal angular frequency $\omega_D$ selected for the detection voltages. Screen 12 is wired to the middle point of transformer 13 and to the input of an operational amplifier 14 the feed-back of which fixed by capacitor 15, makes it possible to bring the screen potential back to a value very close to that of the potential of the test weight.

Under direct current conditions, inductance 16 provides a link between the screen and the potential reference. At angular frequency $\omega_D$, this inductance can be tuned against capacitor 17 so as to reduce further its limited influence on the measurement obtained at the output from amplifier 14.

As angular frequency $\omega_A$ of the action voltages $V_3$ and $V_4$ is small compared to $\omega_D$; filters made up of inductances 18, 19 and 20, 21 and capacitors 22, 23 and 24, 25 make it possible to decouple the action and detection signals.

Likewise filters 26—27 and 28—29 provide a means of introducing the dc supply voltages for amplifier 30 in screen 12 without damping the same.

In a known fashion, the capacitive detectors make use of synchronous detection; the synchronization for the synchronous detection and the oscillator feeding the differential transformer is advantageously obtained through equipotential screen 12 by an opto-electronic link 31.

Orders of magnitude:
Test weight:
— cube with 3 cm long sides
— weight ranging between 0.1 and 0.5 kg

Electrode E:
— surface area approximately 1 cm²

Distance e between electrodes and test weight
$e \cong 100$ μm

Voltage fed to the electrodes:
— effective action voltages: $V_0 \cong 20V$

$V_{translation} < 15V$    frequency $\omega_A > 6.10^3$ rd/s
$V_{rotation} < 5V$

— effective detection voltage:
$V_D \cong 10V$    frequency $\omega_D \cong 2.10^6$ rd/s

Measurement range:
— max. acceleration measured: on the order of a few $10^{-4}$ m/s²

Natural accelerometer angular frequency:
— $\omega_N \cong 10$ rd/s
— bias: less than one thousandth of the measurement range, i.e. a few $10^{-8}$ m/s²
— resolution: on the order of $10^{-6}$ times or measurement range, i.e. $10^{-10}$ m/s²

In the detailed description just presented, the test weight is a hollow or solid cube. The test weight, however, must merely carry on its outer surface six planar surfaces, in parallel two by two and opposite pairs, face to face with the electrodes of the cage. Other shapes are possible (rectangular parallelepipeds, sphere with planar facets) providing they carry three pairs of planar, parallel and opposite sides, situated further on three orthogonal directions to eschew certain coupling effects.

The test weight is made of a conducting material (metal, alloy, ...) or a non-conducting material (e.g. silica) and coated with a metal deposit (e.g. gold). It can be hollow, solid or locally recessed.

**Claim**

A triaxial electrostatic accelerometer comprising
a cube-shaped test weight;
test weight electrodes on the faces of said cube-shaped test weight;
a hollow cage accommodating said test weight and within which said test weight can undergo small movements of translation and rotation;
cage electrodes on said cage, associated with the test weight electrodes respectively and forming capacitors therewith;
characterized in that
on each face of the cube-shaped test weight two electrodes are provided adjacent to each other, the test weight electrodes on two parallel faces of the cube-shaped test weight being opposite two by two, whereby each test weight electrode on a face $(E_1)$ has an adjacent electrode $(E_3)$ on the same face, an opposite electrode $(E_2)$ on the parallel face and a diagonally opposite electrode $(E_4)$ on said parallel face and the test weight electrodes forming three sets of four electrodes, each set being relative to one of the three sensitive axes of the accelerometer, comprising a given electrode, an adjacent electrode, an opposite electrode and a diagonally opposite electrode which form wih the associated cage electrodss capacitors $C_1$, $C_2$, $C_3$ and $C_4$ respectively;
and that the accelerometer further comprises:
means for measuring for each value of the electrodes set j the quantities

$$(C_1 - C_2)_j \qquad (C_3 - C_4)_j$$

$$C_1 + C_2)_j \qquad (C_3 + C_4)_j$$

and producing voltages proportional thereto;
means for forming with said above quantities

$$V_{tr,j}=(C_1+C_3)_j-(C_2+C_4)_j$$

$$V_{rot,j}=(C_3-C_4)_j-(C_1-C_2)_j$$

and producing voltages proportional thereto; means for forming with said above quantities

$$-V_{tr,j}+V_{rot,j}$$

and applying a voltage proportional thereto to the given electrode of an electrode set j;

$$V_{tr,j}-V_{rot,j}$$

and applying a voltage proportional thereto to the opposite electrode of said set j

$$V_{tr,j}+V_{rot,j}$$

and applying a voltage proportional thereto to the adjacent electrode of said set j

$$-V_{tr,j} \quad -V_{rot,j}$$

and applying a voltage proportional thereto to the diagonally opposite electrode of said set j.

**Patentanspruch**

Dreiachsiger elektrostatischer Beschleunigungsmesser mit einer kubusförmigen Testmasse, auf
deren Seiten Testmassenelektroden angeordnet sind, mit einem hohlen, die Testmasse aufnehmenden Käfig, in welchem die Testmasse kleine Rotationen und Translationen ausführen kann und der mit den Testmassenelektroden beziehentlich unter Bildung von Kondensatoren zusammenwirkende Käfigelektroden aufweist, dadurch gekennzeichnet, daß auf jeder Seite der kubusförmigen Testmasse zwei Elektroden nebeneinander angeordnet sind, wobei die Testmassenelektroden auf zwei parallelen Flächen der kubusförmigen Testmasse paarweise gegenüberliegen, wodurch jede Testmassenelektrode auf einer Fläche ($E_1$) eine benachbarte Elektrode ($E_3$) auf der gleichen Fläche, eine gegenüberliegende Elektrode ($E_2$) auf der parallelen Fläche und eine diagonal gegenüberliegende Elektrode ($E_4$) auf der parallelen Fläche besitzt und die Testmassenelektroden drei Gruppen von vier Elektroden bilden, wobei jede Gruppe mit einer der drei Empfindlichkeitsachsen des Beschleunigungsmessers in Beziehung steht und eine vorgegebene Elektrode, eine benachbarte Elektrode, eine gegenüberliegende Elektrode und eine diagonal gegenüberliegende Elektrode umfaßt, welche mit den zugehörigen Käfigelektroden Kondensatoren $C_1$, $C_2$, $C_3$, $C_4$ beziehentlich bilden; daß Meßeinrichtungen zum Messen der Größen

$$(C_1-C_2)_j \qquad (C_3-C_4)_j$$

$$(C_1+C_2)_j \qquad (C_3+C_4)_j$$

für jeden Wert der Elektrodengruppe j und zum Erzeugen von diesen Größen proportionalen Spannungen vorgesehen sind; daß Einrichtungen vorgesehen sind, die mit den vorstehenden Größen die weiteren Größen

$$V_{tr,j}=(C_1+C_3)j-(C_2+C_4)_j$$

$$V_{rot,j}=(C_3-C_4)j-(C_1-C_2)_j$$

bilden und zum Erzeugen dazu proportionaler Spannungen vorgesehen sind; und daß Einrichtungen vorgesehen sind, welche aus den vorstehenden Größen die Größe

$$-V_{tr,j}+V_{rot,j}$$

bilden und eine dazu proportionale Spannung auf eine gegebene Elektrode einer Elektrodengruppe j geben; die Größe

$$V_{tr,j}-V_{rot,j}$$

bilden und eine dazu proportionale Spannung auf die gegenüberliegende Elektrode der Elektrodengruppe j geben; die Größe

$$V_{tr,j}+V_{rot,j}$$

bilden und eine dazu proportionale Spannung auf die benachbarte Elektrode der Elektrodengruppe j geben; die Größe

$$-V_{tr,j} \quad -V_{rot,j}$$

bilden und eine dazu proportionale Spannung auf die diagonal gegenüberliegende Elektrode der Elektrodengruppe j geben.

**Revendication**

Accéléromètre triaxial électrostatique comprenant
une masse d'épreuve en forme de cube;
des électrodes de masse d'épreuve sur les faces de ladite masse d'épreuve en forme de cube;
une cage creuse pour entourer et loger ladite masse d'épreuve et dans laquelle cette masse d'épreuve peut subir de petits mouvements de translation et de rotation;
des électrodes de cage sur ladite cage, associées respectivement aux électrodes de masse d'épreuve et formant avec elles des condensateur;
caractérisé en ce que;
sur chaque face de la masse d'épreuve en forme de cube sont prévues deux électrodes adjacentes l'une à l'autre, les électrodes de masse d'épreuve sur les deux faces parallèles de la masse d'épreuve en forme de cube étant opposées deux à deux, d'où il résulte que chaque électrode de masse d'épreuve sur un face ($E_1$) possède une électrode adjacente ($E_3$) sur la même face, une électrode opposée ($E_2$) sur la face parallèle et une électrode opposée diagonale

ment ($E_4$) sur ladite face parallèle et les électrodes de masse d'épreuve forment trois jeux de quatre électrodes, chaque jeu étant relatif à l'un des trois axes sensibles de l'accéléromètre et comprenant une électrode donnée, une électrode adjacente, une électrode opposée et une électrode diagonalement opposée qui forment respectivement avec les électrodes de la cage associées des capacités $C_1$, $C_2$, $C_3$ et $C_4$;

et en ce que l'accélérateur comprend en outre:

des moyens de mesurer pour chaque valeur d'un jeu d'électrodes j les quantités

$$(C_1-C_2)_j \qquad (C_3-C_4)_j$$

$$(C_1+C_2)_j \qquad (C_3+C_4)_j$$

et de produire des tensions proportionnelles à ces quantités;

des moyens de former avec lesdites quantités ci-dessus

$$_{tr,j}=(C_1+C_3)_j-(C_2+C_4)_j$$

$$V_{rot,j}=(C_3-C_4)_j-(C_1-C_2)_j$$

et de produire des tensions proportionnelles à ces quantités;

des moyens de former avec lesdites quantités ci-dessus

$$-V_{tr,j} \quad +V_{rot,j}$$

et d'appliquer une tension proportionnelle à cette quantité à l'électrode donnée du jeu d'électrodes j;

$$V_{tr,j}-V_{rot,j}$$

et d'appliquer une tension proportionnelle à cette quantité à l'électrode opposée du jeu d'électrodes j;

$$V_{tr,j}+V_{rot,j}$$

et d'appliquer une tension proportionnelle à cette quantité à l'électrode adjacente du jeu d'électrodes j;

$$-V_{tr,j}-V_{rot,j}$$

et d'appliquer une tension proportionnelle à cette quantité à l'électrode diagonalement opposée du jeu d'électrodes j.

# FIG.1

# FIG.2A

# FIG.2B

# FIG.3A

# FIG.3B

1

# FIG.4

# FIG.5

FIG.6

# FIG.7